# EUROPÄISCHE PATENTSCHRIFT

(11) **EP 0 633 166 B1**
(45) Veröffentlichungstag und Bekanntmachung des Hinweises auf die Patenterteilung: **02.01.1997**
(21) Anmeldenummer: 94109938.4
(22) Anmeldetag: 28.06.1994
(51) Int. Cl.: B60R 9/04

(54) **Dachreling für Fahrzeuge**
Roof rails for vehicles
Rails de toit pour véhicules

(30) Priorität: 10.07.1993 DE 4323098
(43) Veröffentlichungstag der Anmeldung: 11.01.1995
(73) Patentinhaber: Happich Fahrzeug-Dachsysteme GmbH, D-42285 Wuppertal (DE)
(72) Erfinder: Lumpe, Karl-Heinz, D-42279 Wuppertal (DE); Kolodziej, Klaus, D-42327 Wuppertal (DE)

(56) Entgegenhaltungen:
- DE-U- 8 136 803
- FR-A- 2 648 093
- US-A- 4 673 119
- US-A- 5 069 377

## Beschreibung

Die Erfindung bezieht sich auf eine Dachreling für Fahrzeuge mit einem Relingrohr, das an den Endbereich von auf der Dachfläche befestigbaren Stützfüßen und ggf. von einem das Relingrohr mittig abstützenden Stützfuß getragen wird, wobei die mit den Endbereichen des Relingrohrs über Befestigungsmittel verbundenen Stützfüße jeweils aus einem aus Metall bestehenden Adapter und einem darauf aufklipsbaren, aus Kunststoff bestehenden Verkleidungskörper gebildet sind und jeder Adapter der Stützfüße eine auf der Dachfläche zur Auflage kommende Befestigungsplatte mit Durchgangsbohrungen für Befestigungsmittel, mit denen der Adapter am Fahrzeugdach befestigbar ist, und einen nach oben von der Befestigungsplatte abstrebenden Stützkörper für das Relingrohr aufweist.

In ständig zunehmendem Maße werden heute Fahrzeuge mit einer Dachreling ausgerüstet, wobei sich zwei von Stützfüßen getragene Relingrohre etwa parallel zueinander in Fahrzeuglängsrichtung nahe den Längsrändern der Dachfläche erstrecken. An den Relingrohren sind Querträger befestigbar, die zur Lastenaufnahme dienen.

Die herkömmlichen Dachrelings haben ganz allgemein den Nachteil, daß sie in der Herstellung zu aufwendig und damit zu teuer sind und daß für ihre Montage speziell ausgebildete Fachkräfte benötigt werden. So zeigt z.B. die FR-A- 2 648 093 eine Dachreling gemäß dem Oberbegriff des Anspruchs 1 mit einem Stützfuß, welcher aus einem Adapter und einem Verkleidungskörper gebildet ist, wobei sowohl der Adapter als auch der Verkleidungskörper mit überstehenden, sich zu Steckzapfen ergänzenden Zungen ausgebildet sind, zwecks Herstellung einer Steckverbindung zwischen dem Stützfuß und einem Relingrohr. Eine Dachreling ähnlichen Aufbaus mit einer Steckverbindung zwischen einem Stützfuß und einem Relingrohr, ist zudem aus der US-A- 4 673 119 bekanntgeworden.

Der vorliegenden Erfindung liegt daher die Aufgabe zugrunde, eine Dachreling der eingangs genannten Art zu schaffen, die sich durch eine einfache und damit kostengünstige Herstellbarkeit, geringes Gewicht und durch eine einfach zu bewerkstelligende Montierbarkeit auszeichnen soll.

Zur Lösung dieser Aufgabe ist vorgesehen, daß jeder Adapter der Stützfüße eine weitere sich senkrecht durch die Befestigungsplatte und den Stützkörper hindurch erstreckende Durchgangsbohrung aufweist, die zum Durchführen einer von unten her in das sich auf dem Stützkörper auf einer ebenen Auflagefläche abstützende Relingrohr einführbare Zylinderschraube dient, welche eine im Relingrohr vorgesehene Bohrung durchsetzt und in eine im Relingrohr angeordnete Gewindeplatte eingeschraubt ist.

Durch diese erfindungsgemäße Maßnahme werden verschiedene Vorteile erzielt. Zunächst ist die Dachreling wesentlich einfacher in der Herstellung, weil die Stützfüße nicht mehr als voluminöse Metallkörper mit in aufwendiger Weise zu behandelnder Oberfläche ausgebildet werden müssen. Die Stützfüße können nunmehr aus einem einfach gestalteten Metallkörper ohne jegliche Oberflächenbehandlung, wie Schleifen, Polieren u. dgl. und den die Metallkörper bzw. Adapter ganz oder teilweise umgebenden Verkleidungskörpern die rein optisch die Stützfüße bilden, bestehen. Da den aus Metall bestehenden Adaptern lediglich eine Stützfunktion, nicht hingegen eine Zierfunktion zukommt, kann deren Größe und Gewichtsvolumen sehr klein gehalten werden, so daß die Dachreling, im Vergleich zu herkömmlichen Vorbildern, relativ leicht ausgebildet werden kann. Die nachträgliche Anordnung der Verkleidungskörper an den Adaptern macht es möglich, die Dachreling, anders als es bisher üblich war, von oben her am Fahrzeugdach unter Sichtkontrolle befestigen zu können. Dies wiederum erlaubt eine nachträgliche Ausstattung eines Fahrzeugs mit einer Dachreling, weil für deren Montage lediglich ein gewisses handwerkliches Geschick nicht hingegen mehr eine spezielle Ausbildung verlangt wird. Eine schraubgemäße Verbindung zwischen dem Adapter und dem Relingrohr ist natürlich schnell, einfach und kostengünstig herzustellen und die Verwendung von Gewindeplatten bringt den Vorteil, die Relingrohre relativ dünnwandig ausführen zu können, weil die Bohrungen nicht mit einem Innengewinde zur Halterung der Zylinderschrauben versehen werden müssen.

In Ausgestaltung der Erfindung kann vorgesehen sein, daß die Adapter mit Vorsprüngen oder Nuten zum Hinterrasten von an den Verkleidungskörpern einstückig angeformten Klipsausbildungen versehen sind.

Eine Beschädigung der Dachfläche oder ein Eindringen von Feuchtigkeit kann in einfacher Weise dadurch verhindert werden, daß die Adapter mit jeweils einer auf der Dachfläche unmittelbar zur Auflage kommenden Unterlage aus weichelastischem Material ausgestattet sind.

Im folgenden wird ein Ausführungsbeispiel der Erfindung anhand der Zeichnung näher erläutert. Es zeigen:
- Fig. 1: eine schaubildliche Ansicht einer kompletten, auf einem Fahrzeugdach angeordneten Dachreling und
- Fig. 2: die schaubildliche Explosivdarstellung einer Dachreling.

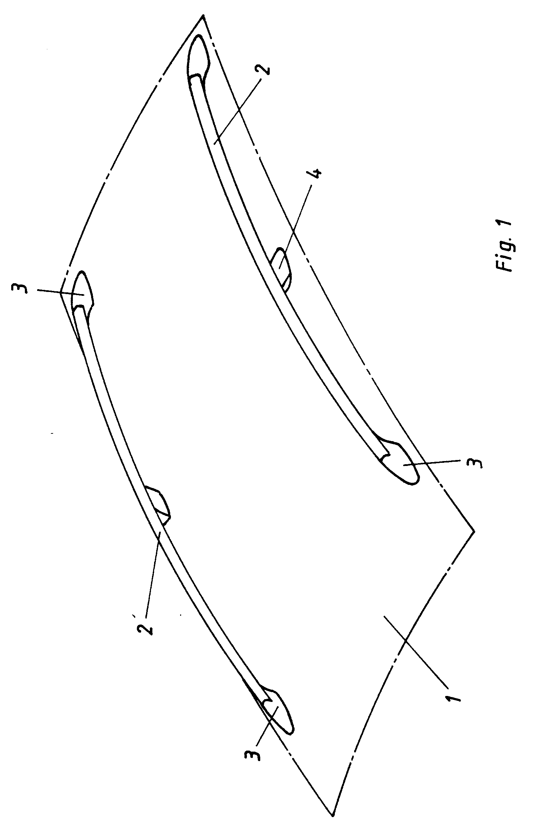

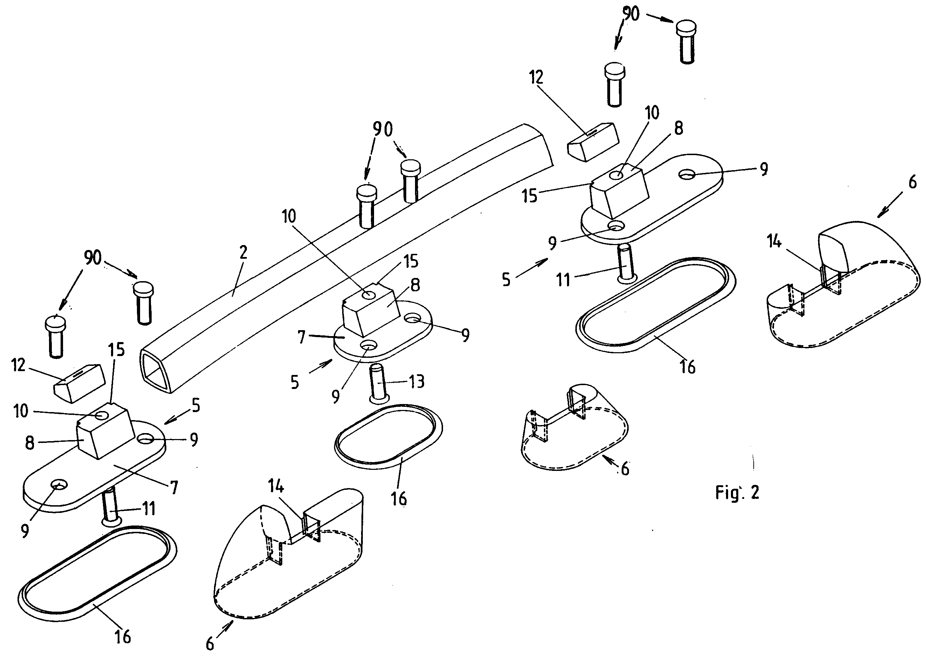

In Fig. 1 ist mit strichpunktierten Linien das Dach 1 eines nicht näher dargestellten Fahrzeugs angedeutet. Auf dem Dach 1 sind zwei Relings jeweils im Bereich eines Längsrands der Dachfläche befestigt. Die Ausbildung einer jeden Reling ergibt sich aus der Explosivdarstellung nach Fig. 2, in der die Einzelteile deutlich gezeigt sind.

Die Dachreling besteht aus einem Relingrohr 2, das von mindestens zwei, an den beiden Endbereichen desselben angeordneten Stützfüßen 3 getragen wird. Rei längeren Relingrohren 2 empfiehlt sich die Anordnung eines dritten Stützfußes 4 in der Relingrohrmitte. Das Relingrohr 2 besteht vorzugsweise aus einem stranggepreßten Aluminiumprofil mit einer den technischen Anforderungen genügenden Rohrwandungsdicke.

Jeder Stützfuß 3, 4 ist zweiteilig ausgebildet und besteht jeweils aus einem Adapter 5 aus Metall und einem darauf aufklipsbaren Verkleidungskörper 6 aus Kunststoff. Jeder Adapter 5, der vorzugsweise als Zinkdruckgußteil ausgebildet ist, setzt sich aus einer auf dem Fahrzeugdach 1 zur Auflage kommenden Befestigungsplatte 7 und einem damit einstückigen, senkrecht nach oben wegstrebenden Stützkörper 8 zusammen. In der Befestigungsplatte 7 sind zwei Bohrungen 9 zum Durchführen von Befestigungsmitteln 90, mit denen die Adapter 5 am Fahrzeugdach festzulegen sind vorgesehen. Eine weitere Bohrung 10 erstreckt sich durch die Befestigungsplatten 7 und Stützkörper 8 hindurch. Durch die Bohrungen 10 der äußeren Stützfüße 3 sind Zylinderschrauben 11 hindurchgeführt, die jeweils eine Bohrung in den Relingrohrendbereichen durchsetzen und in eine im Relingrohr 2 angeordnete Gewindeplatte 12 eingeschraubt sind. Durch die Bohrung 10 des mittleren Stützfußes 4 greift eine gewindefurchende Schraube (DIN 7500) 13 hindurch, der auch eine entsprechende Bohrung im mittleren Bereich des Relingrohrs 2 durchsetzt.

Die Stützkörper 8 sind unsymmetrisch auf den Befestigungsplatten 7 angeordnet, derart, daß die Adapter 5 auf Umschlag eingesetzt werden können. Der Adapter 5 des in Fig. 1 vorne links befindlichen Stützfußes entspricht dem hinten rechts befindlichen Stützfuß, wie dies auch für vorne rechts und hinten links gilt. Es ist natürlich auch denkbar, die Stützkörper 8 symmetrisch auf der Mitte der Befestigungsplatten 7 anzuordnen, was aber die Ausbildung und Montage der Verkleidungskörper 6 erschweren würde.

Die Verkleidungkörper 6 weisen jeweils eine Kappenform mit angespritzten Klipsausbildungen 14 auf, die mit Hinterschnitten, Nuten od. dgl. Rastausbildungen 15 an den Stützkörpern 8 und ggf. an den Befestigungsplatten 7 zusammenwirken können, so daß die Verkleidungskörper 6 durch bloßes Aufstecken montierbar sind.

An den Befestigungsplatten der Stützfüße 3 und 4 werden vor der Montage der Dachreling auf dem Fahrzeugdach 1 Unterlagen 16 aus weichelastischem Material angebracht, die ein Verkratzen der Fahrzeuglackierung wie auch ein Eindringen von Feuchtigkeit in die Verschraubungsbereiche zwischen den Stützfüßen 3, 4 und dem Fahrzeugdach verhindern sollen.

Die neue Dachreling weist ein elegantes Aussehen auf, weil z.B. das Relingrohr 2 eloxiert und die Verkleidungskörper 6 lackiert und strömungsgünstig ausgebildet sein können, wobei hinsichtlich der Farbenauswahl und der Formgestaltung Kundenwünsche in weiten Grenzen erfüllt werden können. Des weiteren besteht die neue Dachreling aus nur wenigen, einfach miteinander zu verbindenden Einzelteilen und weist ein nur geringes Eigengewicht auf. Die Montage der neuen Dachreling auf dem Fahrzeugdach 1 verlangt keine besonderen Fachkenntnisse und kann von oben her unter Sichtkontrolle durchgeführt werden. Sämtliche Befestigungsstellen sind nach dem Aufklipsen der kappenförmigen Verkleidungskörper 6 den Blicken eines Betrachters entzogen, so daß die neue Dachreling auch insoweit den ästhetischen Ansprüchen der Käuferschaft genügt.

## Patentansprüche

1. Dachreling für Fahrzeuge mit einem Relingrohr (2), das an den Endbereichen von auf der Dachfläche befestigbaren Stützfüßen (3) und ggf. von einem das Relingrohr (2) mittig abstützenden Stützfuß (4) getragen wird, wobei die mit den Endbereichen des Relingrohrs (2) über Befestigungsmittel verbundenen Stützfüße (3) jeweils aus einem aus Metall bestehenden Adapter (5) und einem darauf aufklipsbaren, aus Kunststoff bestehenden Verkleidungskörper (6) gebildet sind und jeder Adapter (5) der Stützfüße (3) eine auf der Dachfläche zur Auflage kommende Befestigungsplatte (7) mit Durchgangsbohrungen (9) für Befestigungsmittel, mit denen der Adapter (5) am Fahrzeugdach (1) befestigbar ist und einen nach oben von der Befestigungsplatte (7) abstrebenden Stützkörper (8) für das Relingrohr (2) aufweist, dadurch gekennzeichnet, daß jeder Adapter (5) der Stützfüße (3) eine weitere sich senkrecht durch die Befestigungsplatte (7) und den Stützkörper (8) hindurch erstreckende Durchgangsbohrung (10) aufweist, die zum Durchführen einer von unten her in das sich auf dem Stützkörper (8) auf einer ebenen Auflagefläche abstützende Relingrohr (2) einführbare Zylinderschraube (11) dient, welche eine im Relingrohr (2) vorgesehene Bohrung durchsetzt und in eine im Relingrohr (2) angeordnete Gewindeplatte (12) eingeschraubt ist.

2. Dachreling nach Anspruch 1, dadurch gekennzeichnet, daß die Adapter (5) mit Vorsprüngen, Nuten od. dgl. Rastausbildungen (15) zum Hinterrasten von an den Verkleidungskörpern (6) einstückig angeformten Klipsausbildungen (14) versehen sind.

3. Dachreling nach Anspruch 1 oder 2, dadurch gekennzeichnet, daß die Adapter (5) mit jeweils einer auf der Dachfläche unmittelbar zur Auflage kommenden Unterlage (16) aus weichelastischem Material ausgestattet sind.

4. Dachreling nach Anspruch 1, dadurch gekennzeichnet, daß die Stützkörper (8) jeweils unsymmetrisch auf der zugehörigen Befestigungsplatte (7) der Adapter (5) angeordnet sind.

## Claims

1. Roof railing for vehicles, having a railing tube (2) which is supported at the end regions by supporting feet (3), which can be fastened on the roof surface, and, if appropriate, by a supporting foot (4) supporting the railing tube (2) in the centre, the supporting feet (3), which are connected via fastening means to the end regions of the railing tube (2), each being formed from an adapter (5), which is made of metal, and a lining body (6) which can be clipped onto said adapter and is made of plastic, and each adapter (5) of the supporting feet (3) having a fastening plate (7) which rests on the roof surface and has through holes (9) for fastening means with which the adapter (5) can be fastened on the vehicle roof (1), and a supporting body (8), which protrudes upwards from the fastening plate (7), for the railing tube (2), characterized in that each adapter (5) of the supporting feet (3) has a further through hole (10) which extends perpendicularly through the fastening plate (7) and the supporting body (8) and serves for the insertion of a cheese-head screw (11) which can be inserted from below into the railing tube (2) which is supported on a planar bearing surface on the supporting body (8), passes through a hole provided in the railing tube (2) and is screwed into a threaded plate (12) arranged in the railing tube (2).

2. Roof railing according to Claim 1, characterized in that the adapters (5) are provided with projections, grooves or similar latching formations (15) for the latching behind of clip formations (14) integrally formed on the lining bodies (6).

3. Roof railing according to Claim 1 or 2, characterized in that the adapters (5) are in each case fitted with a base (16) made of flexible material and resting directly on the roof surface.

4. Roof railing according to Claim 1, characterized in that the supporting bodies (8) are in each case arranged non-symmetrically on the associated fastening plate (7) of the adapters (5).

## Revendications

1. Galerie de toit pour véhicules comportant un tube de galerie, qui est supporté dans les zones d'extrémité par des pieds d'appui (3), à fixer sur la surface du toit et éventuellement par un pied d'appui (4) soutenant au milieu le tube de galerie (2), dans laquelle les pieds d'appui (3), reliés aux zones d'extrémité du tube de galerie (2) par des moyens de fixation, sont formés chacun par un adaptateur (5) en métal et par un corps de revêtement (6) en matière plastique, à clipser sur celui-ci et chaque adaptateur (5) des pieds d'appui (3) comporte une plaque de fixation (7), venant en appui sur la surface du toit, avec des trous débouchants (9) pour des moyens de fixation, au moyen desquels l'adaptateur (5) peut être fixé sur le toit (1) du véhicule et un corps d'appui (8), servant d'entretoise, vers le haut, à partir de la plaque de fixation (7), pour le tube de galerie (2), caractérisée en ce que chaque adaptateur (5) des pieds d'appui (3) présente un autre trou débouchant (10) traversant perpendiculairement la plaque de fixation (7) et le corps d'appui (8), qui sert au passage d'une vis cylindrique (11) à introduire, à partir du bas, dans le tube de galerie (2) s'appuyant sur le corps d'appui (8), sur une surface d'appui plane, vis qui traverse un perçage prévu dans le tube de galerie (2) et est vissée dans une plaque filetée (12) placée dans le tube de galerie (2).

2. Galerie de toit selon la revendication 1, caractérisée en ce que les adaptateurs (5) sont pourvus de saillies, de rainures ou d'organes d arrêt similaires (15) pour s'accrocher derrière des formations de clipsages (14), formées d'une seule pièce sur les corps de revêtement (6).

3. Galerie de toit selon la revendication 1 ou 2, caractérisée en ce que les adaptateurs (5) sont équipés chacun d'un support (16) en matériau élastique et souple, venant directement en appui sur la surface du toit.

4. Galerie de toit selon la revendication 1, caractérisée en ce que les corps d'appui (8) sont disposés chaque fois de manière asymétrique sur la plaque de fixation (7) correspondante des adaptateurs (5).
